# EUROPEAN PATENT SPECIFICATION

(11) **EP 3 279 249 B1**
(45) Date of publication and mention of the grant of the patent: **03.03.2021**
(21) Application number: 15887849.6
(22) Date of filing: 19.05.2015
(51) Int. Cl.: C08J 5/04, D04H 1/4218, D04H 1/541, D04H 1/732

(54) **METHOD FOR PREPARING A POROUS FIBER-REINFORCED COMPOSITE**
VERFAHREN ZUR HERSTELLUNG EINES PORÖSEN FASERVERSTÄRKTEN VERBUNDSTOFF
PROCÉDÉ DE FABRICATION D'UN COMPOSITE POREUX RENFORCÉ DE FIBRES

(30) Priority: 03.04.2015 KR 20150047708
(43) Date of publication of application: 07.02.2018
(73) Proprietor: LG Hausys, Ltd., Seoul 150-721 (KR); ENVIONEER Co., Ltd., Bundang-gu, Seongnam-Si Gyeonggi-do (KR)
(72) Inventor: AHN, Seung-Hyun, Seoul 137-850 (KR); HAN, Kyung-Seok, Anyang-si Gyeonggi-do 431-849 (KR); JUNG, Seong-Moon, Daejeon 305-707 (KR)
(74) Representative: Wynne-Jones IP Limited
(86) International application number: PCT/KR2015/005000
(87) International publication number: WO 2016/159439

(56) References cited:
- WO-A1-2014/021084
- WO-A2-2005/047597
- JP-A- 2002 096 413
- JP-A- 2011 102 453
- JP-A- 2011 144 473
- US-A1- 2006 137 798
- US-A1- 2012 065 283

## Description

### [Technical Field]

The present invention relates to a porous fiber-reinforced composite and a method for preparing the same.

### [Background Art]

Conventional thermoplastic composite materials are composed of reinforcing fibers such as glass fibers and carbon fibers, etc., that exhibit high rigidity and thermoplastic resins that configure a matrix. These thermoplastic composite materials are widely used for automobiles and architectural materials since they exhibit higher mechanical properties than general thermoplastic resin materials. A conventional method for preparing a thermoplastic composite material mainly includes mixing a reinforcing fiber with a thermoplastic resin, and then extruding or molding the mixed product through mold pressing. Recently, in order to improve strength and productivity, the composite material has been prepared by applying a dry needle punching process or a wet papermaking process to preferentially prepare a mat-shaped material including the reinforcing fiber, and then, impregnating the resin in the mat.

The composite material composed of the reinforcing fiber and the thermoplastic resin exhibits excellent mechanical strength since the reinforcing fiber serves as a reinforcing material as compared to the thermoplastic resin. As methods for increasing the strength of the reinforcing fiber composite material, a method for increasing stiffness of the reinforcing fiber itself, a method for increasing a ratio of the reinforcing fiber, and a method for improving bonding strength between the reinforcing fiber and the thermoplastic resin have been applied. However, at the time of introducing a process for preparing the mat including the reinforcing fiber through a wet process or a dry process, since there is a limit to improve strength through modification of the reinforcing fiber, it is required to modify a thermoplastic resin which is optimized for a preparation process rather than the conventional powder or short fiber type. In addition, since a general thermoplastic resin is chemically hydrophobic or has a specific gravity smaller than that of water, dispersibility is remarkably decreased during a process for forming the mat, and thus, it is difficult to apply a fibrous thermoplastic resin to a wet papermaking process. Further, since the thermoplastic resin is melted completely after molding to bind the reinforcing fiber while forming the matrix, the thermoplastic resin does not greatly affect improvement of strength.

WO 2014/021084 A1 / EP 2881421 A1 discloses (Abstract): "Provided is a heat-resistant resin composite of excellent heat resistance and bending properties. This heat-resistant resin composite is constituted of a matrix resin and reinforcing fibers dispersed in the matrix resin, the matrix resin being constituted of a heat-resistant thermoplastic polymer having a glass transition temperature 100°C or higher, and a polyester-based polymer comprising a terephthalic acid component (A) and isophthalic acid component (B) at a copolymerization proportion (molar ratio) of (A)/(B)=100/0 to 40/60, the proportion of the heat-resistant thermoplastic polymer in the composite being 30 to 80 wt%."

WO 2005/047597 A2 discloses that (Abstract): "A fiber-fiber composite is disclosed herein comprising majority fibers and minority fibers, the minority fibers having a softening point lower than said majority fibers such that when the admixture of majority fibers and minority fibers are wet laid to form a paper-like structure and subjected to a pressure and a temperature above the softening point of said minority fibers, said majority fibers and minority fibers form said composite having a mean pore diameter equal to or less than about 1 µm with a porosity of greater than about 35%, and a wet strength of greater than about 0.013 kg/mm."

US 2012/065283 A1 discloses that (Abstract): "A composition for the manufacture of a porous, compressible article, the composition comprising a combination of: a plurality of reinforcing fibers; a plurality of polyimide fibers; and a plurality of polymeric binder fibers; wherein the polymeric binder fibers have a melting point lower than the polyimide fibers; methods for forming the porous, compressible article; and articles containing the porous, compressible article. An article comprising a thermoformed dual matrix composite is also disclosed, wherein the composite exhibits a time to peak release, as measured by FAR 25.853 (OSU test), a 2 minute total heat release, as measured by FAR 25.853 (OSU test), and an NBS optical smoke density of less than 200 at 4 minutes, determined in accordance with ASTM E-662 (FAR/JAR 25.853)."

US 2006/137798 A1 discloses that (Abstract): "A method of forming a molding mat formed bundles of reinforcing fibers and bonding materials is provided. The reinforcing fibers are preferably wet use chopped strand glass fibers (WUCS). The bonding materials may be any thermosetting material having a melting point less than the reinforcing fiber. The molding mat may be formed by partially opening the wet use chopped strand glass fibers and filamentizing the bonding materials, blending the reinforcement and bonding fibers, forming the reinforcement and bonding fibers into a sheet, and bonding the sheet. During bonding, the sheet is heated to a temperature above the melting point of the bonding fibers but below the temperature of the glass fibers. The molding mat thus formed may be used as a reinforcement material in sheet molding compounds."

JP 2011 102453 A discloses that (Abstract): "PROBLEM TO BE SOLVED: To provide a nonwoven fabric for reinforcing a FRP, not requiring release paper when preserving the fabric, having strength and stiffness required and sufficient for application operation, and having excellent uniformity. ;SOLUTION: The nonwoven fabric for reinforcing the FRP includes at least a main fiber and a binder fiber, and the binder fiber is a core-sheath binder fiber using a polyethylene terephthalate as the core and a modified polyethylene terephthalate having a melting point lower than that of the core part as the sheath. The nonwoven fabric preferably contains an acrylic resin or a styrene-acrylic resin. The content of the acrylic resin is 1-7 mass% based on the amount of nonwoven fabric, and the content of the core-sheath binder fiber is 5-20 mass% in the nonwoven fabric for reinforcing the FRP. "

JP 2011 144473 A discloses that (Abstract): "PROBLEM TO BE SOLVED: To easily and efficiently produce a carbon fiber/thermoplastic resin composite material, capable of obtaining an excellent electric field-shielding property by uniformly making a composite of the carbon fibers and thermoplastic resin, and also forming a good network structure of the carbon fibers on its inside. ;SOLUTION: This carbon fiber/thermoplastic resin composite material is obtained by heating and compressing the composite nonwoven fabric of the carbon fibers and thermoplastic resin fibers. The weight ratio of the carbon fibers based on the total weight of the carbon fibers and thermoplastic resin fibers constituting the composite nonwoven fabric is 20 to 80 wt.%. The carbon fiber/thermosetting resin composite material is obtained by heating and compressing the composite nonwoven fabric so that the thickness T₂ of the obtained carbon fiber/thermoplastic resin composite material becomes (1/3) to (1/50) based on the thickness T₁ of the composite nonwoven fabric."

### [Disclosure]

### [Technical Problem]

It is an aspect of the present invention to provide a porous fiber-reinforced composite capable of achieving mechanical strength and weight reduction.

It is another aspect of the present invention to provide a method for preparing the porous fiber-reinforced composite.

### [Technical Solution]

The present invention is set out in the appended claims. Any embodiments, aspects or examples of the present description/disclosure that do not fall within the scope of said claims are provided for illustrative purposes only and do not form part of the present invention.

In accordance with one example, a porous fiber-reinforced composite includes: a first fibrous particle; a second fibrous particle; and a binder for binding the first fibrous particle and the second fibrous particle, wherein the first fibrous particle is bound to the second fibrous particle by the binder to form an irregular network structure including pores, the first fibrous particle is an inorganic fiber or an organic fiber, the second fibrous particle includes a first thermoplastic resin, the binder includes a second thermoplastic resin, and a melting point of the first thermoplastic resin is higher than that of the second thermoplastic resin.

The first fibrous particle and the second fibrous particle may be partially or entirely coated with the binder on surfaces of the respective particles so as to form coating parts, and the coating parts formed on the respective surfaces may be fused and bound to each other.

The porous fiber-reinforced composite may have a form of a sheet, and a thickness variation in the sheet of 2 mm or less.

The first thermoplastic resin may have a specific gravity of more than 1.

In accordance with an aspect of the present invention, a method for preparing a porous fiber-reinforced composite includes: dispersing a reinforcing fiber and a bicomponent polymer fiber in an acidic aqueous solution to prepare a slurry solution; forming a web from the slurry solution by a wet papermaking process; and heat treating and drying the formed web, wherein the reinforcing fiber is an inorganic fiber or an organic fiber, the bicomponent polymer fiber includes a core part and a sheath part, the core part includes a first thermoplastic resin, and the sheath part includes a second thermoplastic resin, and a melting point of the first thermoplastic resin is higher than that of the second thermoplastic resin, characterised in that the reinforcing fiber and the bicomponent polymer fiber are mixed to have a total content of 0.1 g to 10 g per 1L of the acidic aqueous solution.

While being subject to heat treating and drying, the second thermoplastic resin of the sheath part may be melted to bind the reinforcing fiber and the bicomponent polymer fiber through heat fusion, thereby forming an irregular network structure including pores.

### [Advantageous Effects]

The porous fiber-reinforced composite has high mechanical strength such as tensile strength, flexural strength, and impact strength, low density, excellent sound absorption performance, and moldability.

### [Description of Drawings]

FIG. 1 is a cross-sectional view of a porous fiber-reinforced composite according to an exemplary embodiment of the present invention.
FIG. 2 shows preparation of a porous fiber-reinforced composite according to another exemplary embodiment of the present invention which includes applying heat and pressure to a reinforcing fiber and a bicomponent polymer according to a method for preparing a porous fiber-reinforced composite.
FIG. 3 schematically shows a method for preparing a porous fiber-reinforced composite according to another exemplary embodiment of the present invention.
FIG. 4 is SEM images of inner parts of preformed boards of Example 1 and Comparative Example 1.
FIG. 5 is SEM images showing enlarged cross sections of glass fibers on cut surfaces of the preformed boards of Example 1 and Example 2.

### [Best Mode]

Hereinafter, exemplary embodiments of the present invention will be described in detail. However, the following exemplary embodiments are only provided by way of example of the present invention, and the present invention is not limited thereto, but may be defined only by the scope of the following claims.

According to an exemplary embodiment of the present invention, there is provided a porous fiber-reinforced composite including: a first fibrous particle; a second fibrous particle; and a binder for binding the first fibrous particle and the second fibrous particle, wherein the first fibrous particle is bound to the second fibrous particle by the binder to form an irregular network structure including pores, the first fibrous particle is an inorganic fiber or an organic fiber, the second fibrous particle includes a first thermoplastic resin, the binder includes a second thermoplastic resin, and a melting point of the first thermoplastic resin is higher than that of the second thermoplastic resin.

The first fibrous particle and the second fibrous particle may be partially or entirely coated with the binder component. That is, the first fibrous particle and the second fibrous particle form coating parts formed by the binder on the surfaces of the respective particles.

The respective coating parts of the first fibrous particle and the second fibrous particle may be fused to each other, such that the first fibrous particles and the second fibrous particles may be irregularly bound to each other. The first fibrous particles and the second fibrous particles bound as such may form an irregular network structure including pores.

The porous fiber-reinforced composite is formed to include a pore structure. A composite that is conventionally prepared by mixing raw materials, followed by extrusion and mold pressing has a difficulty in forming the pore structure. On the other hand, the porous fiber-reinforced composite prepared by the method for preparing the porous fiber-reinforced composite to be described below forms the pore structure. Specifically, the porous fiber-reinforced composite may have a porosity of about 30% to about 80% by volume.

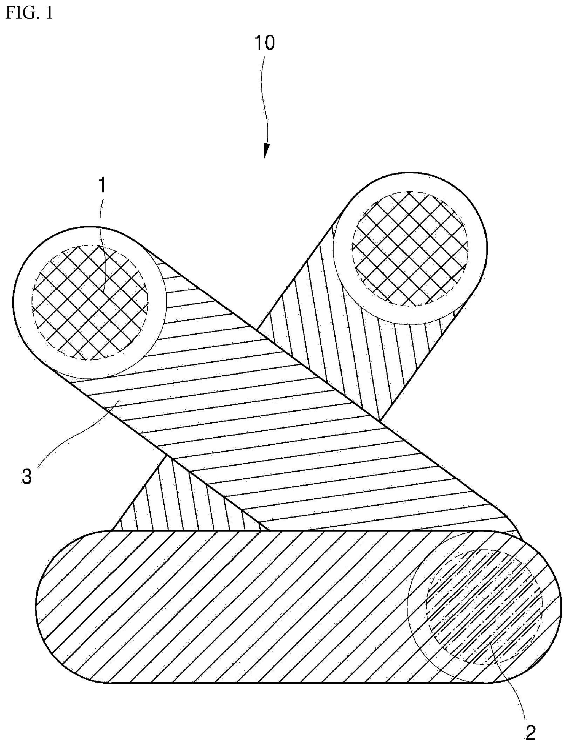

FIG. 1 is a cross-sectional view of a porous fiber-reinforced composite 10 including a first fibrous particle 1; a second fibrous particle 2; and a binder 3 according to an exemplary embodiment of the present invention.

Since the porous fiber-reinforced composite is a material that is able to implement high mechanical strength such as tensile strength, flexural strength, and impact strength, and to implement weight reduction due to low density, the porous fiber-reinforced composite may be effectively applied to automobiles and building materials requiring these properties. Further, the porous fiber-reinforced composite may satisfy excellent sound absorption performance condition required for the automobiles and building materials, and may have excellent moldability.

The porous fiber-reinforced composite may be prepared according to the method for preparing the porous fiber-reinforced composite to be described below. The porous fiber-reinforced composite as prepared above may be prepared by well dispersing the first fibrous particles and the second fibrous particles.

As described above, when the first fibrous particles and the second fibrous particles are well dispersed in the resin, a bonding strength between the fibers and the resin is increased, and thus, strength of the porous fiber-reinforced composite is improved.

The porous fiber-reinforced composite may improve the dispersion of the first fibrous particles and the second fibrous particles (for convenience, also referred to as 'fibrous particles') to obtain an effect of improving strength, based on the correlation between dispersibility and strength as appreciated above.

When the dispersibility of the fibrous particles is good, the porous fiber-reinforced composite formed into a sheet has a reduced thickness variation in the sheet. As the dispersibility of the fibrous particles is increased, a part in which the fibrous particles are agglomerated becomes smaller. On the contrary, when the dispersibility of the fibrous particles is decreased, the fibrous particles become agglomerated. When the fibrous particles are agglomerated, a thickness of the sheet corresponding to the agglomeration becomes increased. Therefore, the sheet of the porous fiber-reinforced composite having excellent dispersibility of the fibrous particles has a predetermined thickness. That is, the thickness variation in the sheet of the porous fiber-reinforced composite having excellent dispersibility of the fibrous particles is reduced.

In an exemplary embodiment, the porous fiber-reinforced composite may have a form of a sheet, and the thickness variation in the sheet may be about 2 mm or less.

In another exemplary embodiment, the porous fiber-reinforced composite may have a form of a sheet, and the thickness variation in the sheet may be about 0.3 mm or less.

The 'thickness deviation in the sheet' means a difference between the maximum thickness and the minimum thickness in one sheet.

The porous fiber-reinforced composite may be first formed into a thin sheet, and then, a plurality of sheets may be stacked and laminated together and may be used for predetermined automobiles or building materials.

Another example of a method for evaluating if the dispersibility of the fibrous particles included in the porous fiber-reinforced composite is improved may include a method for evaluating a cross-section of the porous fiber-reinforced composite using a color difference meter. As the dispersibility of the fibrous particles is increased, a part in which the fibrous particles are agglomerated becomes smaller, and thus, white color is more uniformly exhibited. On the contrary, when the dispersibility of the fibrous particles is decreased, the part in which the fibrous particles are agglomerated and overlapped with each other becomes larger, and thus, the part becomes darker. The difference may be measured by using the color difference meter.

An indirect method for evaluating if the dispersibility of the fibrous particles included in the porous fiber-reinforced composite is improved may include comparison of strength. If the dispersibility of the fibrous particles is improved, then the strength of the porous fiber-reinforced composite is improved. Thus, porous fiber-reinforced composites in which only dispersibility of the fibrous particles is varied, for example, by changing the preparation method, etc., while maintaining other conditions such as kinds, and contents, etc., of the first fibrous particle, the second fibrous particle, and the binder included in the porous fiber-reinforced composite, may be prepared, and then, strength properties thereof may be compared to one another.

The porous fiber-reinforced composite has excellent dispersibility of the first fibrous particle and the second fibrous particle, thereby implementing more excellent mechanical strength as described above, and thus, weight reduction may be achieved.

The porous fiber-reinforced composite may also be prepared into a sheet in which the first fibrous particles and the second fibrous particles have one-direction orientation. As described above, when the sheet of the porous fiber-reinforced composite is provided with the one-direction orientation, the sheet has high mechanical properties along a direction to which the orientation is imparted. The sheet is appropriate for being applied as a material capable of withstanding a large force in a specific direction.

The porous fiber-reinforced composite includes two types of reinforcing fibers, that is, first fibrous particle and second fibrous particle. The porous fiber-reinforced composite may include both of the first fibrous particle and the second fibrous particle together to thereby be designed so that predetermined characteristics are excellently expressed by controlling kinds and content ratios thereof.

For example, by using a material having a high tensile elastic modulus such as a glass fiber as the first fibrous particle and using a thermoplastic fiber formed of a thermoplastic resin as the second fibrous particle, it is possible to further improve strength additionally while simultaneously providing elasticity of the thermoplastic resin. Since the thermoplastic resin forming the second fibrous particle is a thermoplastic resin having a relatively high melting point, it is possible to expect improvement of additional strength as compared to a case where only the first fibrous particle exists. Further, since the thermoplastic fiber has excellent elasticity as compared to the first fibrous particle, impact energy may be effectively attenuated against impact from the outside.

Further, since the melting point of the first thermoplastic resin included in the binder is relatively low, the porous fiber-reinforced composite has low-temperature moldability.

In an exemplary embodiment, a weight ratio of a content of the first fibrous particle to the sum of contents of the second fibrous particle and the binder in the porous fiber-reinforced composite may be about 20 : 80 to about 60 : 40, specifically, about 30 : 70 to about 50 : 50. As the content of the first fibrous particle is higher, strength may be more excellent, but the degree of improvement may be reduced at a predetermined content or more. The above-described range of content is appropriate for effectively securing an effect in which strength is improved according to an increase in the content of the first fibrous particle, while simultaneously for achieving an effect obtained from the second fibrous particle.

The second fibrous particle and the binder are derived from the bicomponent polymer fiber referring to the method for preparing the porous fiber-reinforced composite to be described below. Therefore, in the method for preparing the porous fiber-reinforced composite to be described below, the content of the first fiber fibrous particle and the content of the bicomponent polymer fiber may be adjusted within the above-described range to prepare the porous fiber-reinforced composite having the above-described content ratio.

In another embodiment, the porous fiber-reinforced composite may include about 50 parts by weight to about 250 parts by weight of the binder relative to 100 parts by weight of the second fibrous particle. A content ratio of the second fibrous particle and the binder may be adjusted according to the above-described content ratio, and thus, excellent dispersibility may be maintained while appropriately imparting bonding strength and elasticity.

As described above, in the method for preparing the porous fiber-reinforced composite to be described below, the content ratio of the second fibrous particle and the binder may be implemented by adjusting a content ratio of a core part and a sheath part of the bicomponent polymer fiber.

The first fibrous particle may include at least one selected from the group consisting of glass fibers, aramid fibers, carbon fibers, carbon nanotubes, boron fibers, metal fibers, and a combination thereof. Examples of the metal fiber may include nickel fibers, iron fibers, stainless steel fibers, copper fibers, aluminum fibers, silver fibers, and gold fibers.

Specifically, the first fibrous particle may have a cross-sectional diameter of about 5 µm to about 40 µm. The first fibrous particle having a thickness in the above-described range may appropriately impart strength and ensure orientation and dispersibility. The porous fiber-reinforced composite including the first fibrous particle having a thickness in the above-described range may be resistant to external impact, and when the first fibrous particles are dispersed in an aqueous solution in preparation according to the method for preparing the porous fiber-reinforced composite to be described below, it is possible to provide an appropriate hydroentangle property in the aqueous solution, and thus, the sheet may be easily formed.

The first fibrous particle may have a length of about 1 mm to about 50 mm. The first fibrous particle having the above-described range of length may provide appropriate strength and secure orientation and dispersibility, and further, may provide appropriate bonding strength between the fibrous particles, such that the porous fiber-reinforced composite may have excellent strength, while simultaneously preventing reduction in dispersibility causing when the fiber is entangled and aggregated due to an excessive long length, and it is appropriate for forming the sheet.

The first thermoplastic resin capable of forming the second fibrous particle may include at least one selected from the group consisting of polyester, polypropylene (PP), polyethylene (PE), acrylbutadiene styrene (ABS), polycarbonate (PC), nylon, polyvinyl chloride (PVC), polystyrene (PS), polyurethane (PU), polymethylmethacrylate (PMMA), polylactic acid (PLA), polytetrafluoroethylene (teflon), and a combination thereof. The first thermoplastic resin capable of forming the second fibrous particle may be, for example, polypropylene or polyester.

The second thermoplastic resin capable of forming the binder may include at least one selected from the group consisting of polyester, polyethylene, polypropylene, polyethylene (PE), acrylbutadiene styrene (ABS), polycarbonate (PC), nylon, polyvinyl chloride (PVC), polystyrene (PS), polyurethane (PU), polymethylmethacrylate (PMMA), polylactic acid (PLA), polytetrafluoroethylene (teflon), and a combination thereof.

As described above, when the first thermoplastic resin and the second thermoplastic resin are selected as exemplified above, the melting point of the first thermoplastic resin is required to be higher than that the second thermoplastic resin.

Further, the first thermoplastic resin and the second thermoplastic resin may be selected, respectively, so that materials of the core part and the sheath part of the bicomponent polymer fiber used in the method for preparing the porous fiber-reinforced composite to be described below satisfy the conditions above.

Specifically, the melting point of the first thermoplastic resin may be about 160°C or more. More specifically, the melting point of the first thermoplastic resin may be about 200 °C to about 400 °C. By allowing the first thermoplastic resin to have the above-described range of melting point, a fibrous phase may be maintained even after the binder is melted at the time of low-temperature molding. When the melting point of the first thermoplastic resin is less than 160°C, a thermoforming temperature needs to be excessively reduced so as to maintain the fibrous phase. Otherwise, in the porous fiber-reinforced composite including the first thermoplastic resin having a melting point less than 160°C, thermal stability may be deteriorated later, and dimensional changes or polymer degeneration, etc., may be caused. Further, a temperature difference between the first thermoplastic resin and the second thermoplastic resin may be excessively reduced, and thus, it may be difficult to adjust a molding temperature.

For example, the first thermoplastic resin may be polyester such as polyethylene terephthalate, polypropylene, etc.

Specifically, the melting point of the second thermoplastic resin may be less than about 200°C. The binder may serve to bind the first fibrous particles and the second fibrous particles. When the second thermoplastic resin forming the binder has a lower melting point than that of the first thermoplastic resin, that is, a material having a relatively low melting point is selected as the second thermoplastic resin, it may be melted at a low temperature, and thus, the low-temperature moldability may be secured. As the binder, for example, low melting polyester, polypropylene, polyethylene, etc., may be used. Since the low melting point polyester is melted at about 100°C to about 140°C which is lower than that of a general polyester, and polypropylene is melted at about 160°C, low melting point polyester, specifically, low melting point polyethylene terephthalate, polypropylene, polyethylene, etc., may be appropriately selected according to the molding temperature to be applied.

In another exemplary embodiment, a specific gravity of the first thermoplastic resin is higher than about 1. In the method for preparing the porous fiber-reinforced composite to be described below, the bicomponent polymer fiber is dispersed in an acidic aqueous solution. It is required to use a material having a specific gravity higher than 1 which is the specific gravity of water since it is easy to improve dispersibility and form a network structure. Accordingly, the core part of the bicomponent polymer fiber may be a thermoplastic resin having the specific gravity higher than 1, such as polyester.

The second fibrous particle may have a cross-sectional diameter of about 5 µm to about 30 µm. The second fibrous particle having the above-described range of thickness may provide appropriate strength and secure orientation and dispersibility. The porous fiber-reinforced composite including the second fibrous particle having the above-described range of thickness may have excellent strength properties, and when the first fibrous particles are dispersed in an aqueous solution in preparation according to the method for preparing the porous fiber-reinforced composite to be described below, it is possible to provide an appropriate hydroentangle property in the aqueous solution, and thus, the sheet may be easily formed.

The second fibrous particle may have a length of about 1 mm to about 50 mm. The second fibrous particle having the above-described range of length may provide appropriate strength and secure orientation and dispersibility, and further, may provide appropriate bonding strength between the fibrous particles, such that the porous fiber-reinforced composite may have excellent strength, while simultaneously preventing reduction in dispersibility causing when the fiber is entangled to form a rope shape due to an excessive long length, and it is appropriate for forming the sheet.

The porous fiber-reinforced composite may have a porosity of about 30 to about 80% by volume, wherein the porosity is a porosity of the porous fiber-reinforced composite obtained in each step of the method for preparing the porous fiber-reinforced composite material to be described below. For example, the porous fiber-reinforced composite may be heated to have a porosity of about 90% by volume due to additional expansion.

As described above, the porous fiber-reinforced composite forms open pores while forming a network structure. When the porosity of the porous fiber-reinforced composite obtained by the method for preparing the porous fiber-reinforced composite is about 30 to about 80% by volume, it is possible to achieve weight reduction while maintaining strength, and further, to have excellent sound absorption performance.

Sound waves coming through open pores of the porous fiber-reinforced composite are attenuated by vibration of the fiber of the second fibrous particle, and thus, the porous fiber-reinforced composite may be applied as sound-absorbing materials. As the porosity of the porous fiber-reinforced composite is higher, the content of the second fibrous particle is higher, and a length through which the sound waves pass, an effect in which energy is attenuated may be excellent. The length through which the sound waves pass is increased when, for example, a thickness of the material itself is large or when the pore connectivity is good even if the porosity is the same. The porous fiber-reinforced composite may be usefully applied as a material having a predetermined degree of porosity, and having an improved sound absorption performance by adjusting the content of the second fibrous particle and further controlling the length through which the sound waves pass. In particular, since the second fibrous particle is more flexible than the hard first fibrous particle, the effect in which the sound energy is attenuated is high, and thus, the second fibrous particle effectively improves the sound absorption performance.

The porous fiber-reinforced composite may achieve weight reduction as described above. Specifically, the porous fiber-reinforced composite may have a density of about 0.1 g/cm³ to about 1.6 g/cm³.

The porous fiber-reinforced composite may be prepared in a form suitable for the usage to be applied, for example, a sheet.

The sheet of the porous fiber-reinforced composite may be prepared to have a weight suitable for the usage to be applied, and the porous fiber-reinforced composite may have a weight of about 50 g/m² to about 1200 g/m².

In another exemplary embodiment of the present invention, there is provided a method for preparing a porous fiber-reinforced composite including: dispersing a reinforcing fiber and a bicomponent polymer fiber in an acidic aqueous solution to prepare a slurry solution; forming a web from the slurry solution by a wet papermaking process; and heat treating and drying the formed web.

The above-described porous fiber-reinforced composite may be prepared by the above-described method for preparing the porous fiber-reinforced composite.

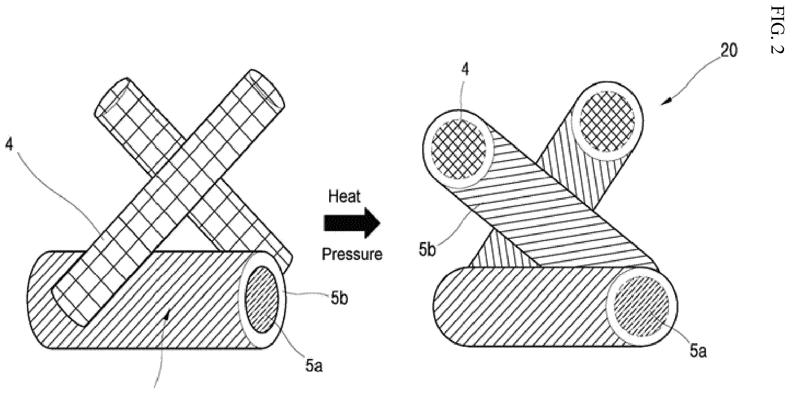

FIG. 2 shows preparation of a porous fiber-reinforced composite 20 which includes applying heat and pressure to a reinforcing fiber 4 and a bicomponent polymer fiber 5 according to the method for preparing the porous fiber-reinforced composite.

The reinforcing fiber 4 may be the first fibrous particle as described above. Therefore, a detailed description of the reinforcing fiber 4 is the same as described for the first fibrous particle. The reinforcing fiber 4 may be an inorganic fiber or an organic fiber as described above.

The bicomponent polymer fiber 5 includes a core part 5a and a sheath part 5b, and the core part 5a includes the first thermoplastic resin, and the sheath part 5b includes the second thermoplastic resin.

The melting point of the first thermoplastic resin is higher than that of the second thermoplastic resin.

Detail descriptions of the first thermoplastic resin and the second thermoplastic resin are the same as described above.

While being subject to heat treatment and drying step, the second thermoplastic resin of the sheath part may be melted to bind the reinforcing fiber and the bicomponent polymer fiber through heat fusion, thereby forming an irregular network structure including pores.

The second thermoplastic resin of the sheath part is present in a state in which the core part is coated, and is melted in the heat treatment and drying step and transferred to the reinforcing fiber to partially or entirely coat the reinforcing fiber, and as the melted state is solidified, the sheath part acts as the binder for binding the core part of the bicomponent fiber and the reinforcing fiber.

As described above, since the sheath part acts as the binder, a separate binder may not be additionally used in the method for preparing the porous fiber-reinforced composite.

The thermoplastic resin forming the sheath part of the bicomponent polymer fiber has a relatively low melting point, and thus, it is possible to perform low-temperature molding.

The porosity of the porous fiber-reinforced composite, and the degree of coating transferred to the reinforcing fiber, etc., may be adjusted by changing the contents of the core part and the sheath part of the bicomponent polymer fiber.

For example, in the bicomponent polymer fiber, the sheath part may have a weight of about 50 parts by weight to about 250 parts by weight based on 100 parts by weight of the core part.

In the method for preparing the porous fiber-reinforced composite, even though the bicomponent polymer fiber formed of the chemically hydrophobic thermoplastic resin is dispersed into the acidic aqueous solution, dispersibility may be improved by constituting the bicomponent polymer fiber into the core part and the sheath part, and increasing the specific gravity of the core part. As described above, when the specific gravity of the core part of the bicomponent polymer fiber is larger than 1, the degree of dispersion may be effectively improved during a process of stirring in the aqueous solution.

In the reinforcing fiber and the bicomponent polymer fiber, the sheath part may be surface-treated to further improve dispersibility in the acidic aqueous solution. As a result, it is possible to prepare a porous fiber-reinforced composite having more excellent dispersibility.

The surface treatment of the sheath part of the bicomponent polymer fiber and the reinforcing fiber may be performed by introducing a functional group such as a fluoro group, a hydroxyl group, a carboxyl group, an alkyl group, or the like, onto a surface or by coating the surface with a coating agent. For example, when preparing the reinforcing fiber and the bicomponent fiber polymer fiber, a surface treatment agent capable of acting on the surface of the sheath part of the bicomponent polymer fiber and the reinforcing fiber to introduce the functional group may react with the fibers by a dipping process, etc.

Specifically, the reinforcing fiber or the bicomponent polymer fiber may be subjected to silane treatment by the surface treatment agent or the coating agent usable in the preparation of the reinforcing fiber and the bicomponent polymer fiber, thereby improving bonding strength between the fibers, improving heat resistance by carbonization, improving hydrophilicity by hydrolysis, or improving water dispersibility by oxidation.

Examples of the surface treatment agent may include a fluorine-based wax (for example, PFAO, or the like), a hydrocarbon-based wax, and a silicone-based polymer, etc.

The coating agent may impart properties such as hydrophilicity / hydrophobicity, water repellency, flame retardancy, nonflammability, heat resistance, acid resistance, alkali resistance, durability, and stain resistance, etc., depending on components thereof. Specifically, as the coating agent, a water-repellent agent such as a fluorine-based wax (for example, PFAO, or the like), a hydrocarbon-based wax, a silicone-based polymer compatibilizer, or the like, may be used.

A content ratio of the reinforcing fiber and the bicomponent polymer fiber may be adjusted depending on desired physical properties of the porous fiber-reinforced composite to be prepared.

For example, the weight ratio of the reinforcing fiber and the bicomponent polymer fiber may be about 20 : 80 to about 60 : 40, and specifically, about 30 : 70 to about 50 : 50.

Specifically, in the method for preparing the porous fiber-reinforced composite, the reinforcing fiber and the bicomponent polymer fiber may be mixed so that a total content of the reinforcing fiber and the bicomponent polymer fiber may be about 0.1 g to about 10 g per 1L of the acidic aqueous solution. By adjusting the total content of the reinforcing fiber and the bicomponent polymer fiber within the above-described range, it is possible to maintain excellent dispersibility to prepare a sheet having a uniform thickness. Then, in the method for preparing the porous fiber-reinforced composite, a plurality of composite sheets may be stacked by an additional process to form a preformed board having a uniform thickness, or after that, the preformed board may be expanded and used. The porous fiber-reinforced composite prepared by the method for preparing the porous fiber-reinforced composite may secure physical properties due to excellent dispersibility.

The acidic aqueous solution may have a pH of about 1 to about 4. By adjusting the pH of the acidic aqueous solution to the above-described range, charges on the surface of the glass fiber may be generated without causing chemical decomposition of silica (SiO₂), alumina (Al₂O₃), or boron (B₂O₅) which is a glass fiber component, due to the strong acid, and thus, dispersibility may be further improved.

The method for preparing the porous fiber-reinforced composite may further include: stirring the slurry solution. By further including the step of stirring the slurry solution, the dispersibility may be further improved.

In the method for preparing the porous fiber-reinforced composite, the step of heat treating and drying the formed web may be performed at about 100 to about 180°C. The temperature range is determined based on a temperature at which the sheath part of the bicomponent fiber begins to soften or melt. When the temperature is lower than 100°C, it is difficult to dry moisture, and the bicomponent polymer fiber (sheath part) does not sufficiently soften, and thus, moisture may remain after drying into the form of the sheet, and it is difficult for the sheet to have a fixed structure. On the contrary, when the temperature is higher than 180°C, the sheath part of the bicomponent polymer fiber is completely melted, and thus, it is difficult to be uniformly transferred to the reinforcing fiber from the bicomponent fiber. Further, there is a concern that the sheath part polymer of the bicomponent polymer fiber may be degenerated at a melting point or higher.

By appropriately adjusting the cross-sectional diameter of the core part of the bicomponent polymer fiber, followed by heat-treatment and drying at an appropriate heat treatment temperature, the core of the bicomponent polymeric fiber may not be melted, but may be included in the porous fiber-reinforced composite made from fibrous particles.

During the wet papermaking process, the fibers are uniformly mixed in the slurry aqueous solution to form a hydro-entangled web along a mesh that moves along a conveyor belt, wherein an inclination may be imparted as the fibers rise along the mesh, and thus, the sheet prepared as described above may have orientation. By imparting the orientation in one direction to the fiber component in the porous fiber-reinforced composite, the strength in one direction may be further strengthen. Therefore, the porous fiber-reinforced composite may be prepared so as to have the orientation selectively according to the usage to be applied. For example, as the content of the second fibrous particle is increased, it may be disadvantageous in view of dimensional stability, and thus, the orientation may be imparted to complement the dimensional stability while including the high content of the second fibrous particle.

For example, when the fibers are moved from a head box to the conveyor belt to thereby form a sheet, an inclination may be imparted to a part where the sheet is formed (inclined web formation), and thus, it is possible to design the process so that the fibers are able to be laid well in a machine direction (MD) as compared to the planar conveyor belt. The directionality may be imparted in the MD (machine direction) and a cross direction (CD) separately, and it is easier to impart the directionality in the MD direction as compared to the CD direction.

The slurry solution may further include an additive such as a crosslinking agent, or an additional binder.

The crosslinking agent acts to strengthen chemical bonding strength between the reinforcing fiber and the bicomponent polymer fiber. For example, a silane-based compound, a maleic acid-based compound, etc., may be used as the crosslinking agent.

A content of the crosslinking agent may be about 0 to about 5 parts by weight based on 100 parts by weight of the total fibers (the sum of reinforcing fiber and bicomponent polymer fiber).

The additional binder may be water soluble polymers such as starch, casein, polyvinyl alcohol (PVA), carboxymethyl cellulose (CMC), etc.; emulsions such as polyethylene, polypropylene, polyamide, etc.; inorganic compounds such as cement, calcium sulfate-based clay, sodium silicate, alumina silicate, and calcium silicate, etc.

A content of the additional binder may be about 0 to about 5 parts by weight based on 100 parts by weight of the total fibers (the sum of reinforcing fiber and bicomponent polymer fiber).

According to an exemplary embodiment, the porous fiber-reinforced composite may be prepared as follows. First, after the reinforcing fiber and the bicomponent polymer fiber are blended, the blended fibers are stirred in an aqueous solution including the additives, and then moved to the head box in which the web is able to be formed. The slurry in the headbox passes through a vacuum intake system to form a wet web, and is prepared into a sheet by passing through a dryer. A weight of the sheet may be about 50 grams to about 600 grams per square meter to easily perform subsequent thermal molding. A drying temperature is set to about 100°C to about 180°C according to the material of the sheath part so that the sheath part of the bicomponent polymer fiber is able to act as the binder. The prepared sheet shaped composite material is cut according to the usage and stacked, and is prepared into a plate-shaped preformed board form having a thickness of about 20 mm to about 80 mm through a thermo-compression press. In molding the preformed board, when a bicomponent fiber composed of a low melting point polyester sheath part is used, a temperature for the molding may be lower than that of a bicomponent polymer fiber composed of general polypropylene sheath part. The preformed board prepared as described above may be prepared into a desired molded article through an additional molding process. For example, sheets of materials suitable for the usage to be applied may be further stacked and laminated on the top and bottom of the preformed board, and further, the preformed board may be expanded by heating, followed by molding, and thus, a molded article having a final desired shape may be prepared.

In an exemplary embodiment, cover materials may be stacked on top and bottom of the preformed board, the stacked sheet may be heated in an infrared oven to expand the preformed board, and then, moved to the press at room temperature. Then, a pressure may be applied thereon to manufacture an under cover for a vehicle.

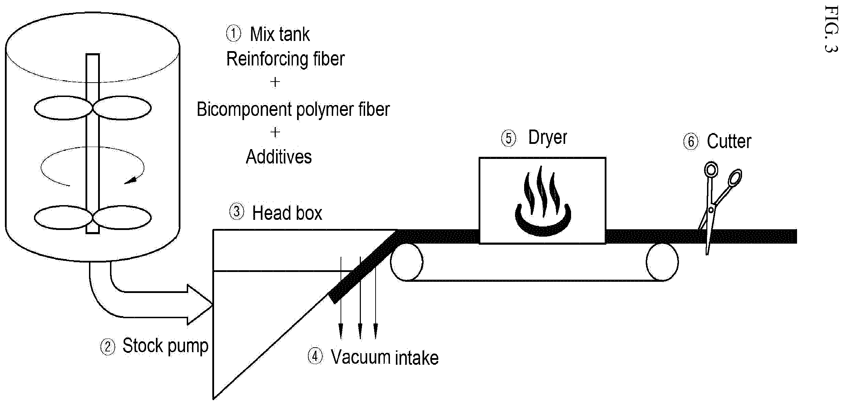

FIG. 3 schematically shows the method for preparing a porous fiber-reinforced composite according to the exemplary embodiment of the present invention.

Hereinafter, Examples and Comparative Examples of the present disclosure will be described. However, the following Examples are only provided as one exemplary embodiment of the present invention, and the present invention is not limited to the following Examples.

### (Examples)

### Example 1

A bicomponent polymer fiber in which a polyester core part and a low melting point polyester sheath part had a weight ratio of 50 : 50 and a length was 5 mm and a thickness was 4 denier (4g / 9000 metres) (about 20 µm in cross-sectional diameter) to ensure water dispersibility, was prepared. A glass fiber was prepared by cutting a glass fiber having a cross-sectional diameter of 13 µm coated to be suitable for water dispersion so that a length was 13 mm. 40 parts by weight of the glass fiber and 60 parts by weight of the bicomponent polymer fiber were blended, and stirred in an aqueous solution with pH adjusted to 2 using hydrochloric acid for 1 hour. Here, a total content of the glass fiber and the bicomponent polymer fiber was 2 g per 1L of water. The aqueous solution slurry after the stirring process was subjected to a wet papermaking process to form a web through a vacuum suction device in a head box.
After the web was formed, the web was passed through an oven dryer at 140°C to completely dry moisture, thereby preparing a porous fiber-reinforced composite as a sheet. The dried sheet had a thickness of about 5 mm at 120 g/m². 10 sheets above were stacked so that the basis weight was 1200 g/m², followed by a hot press process at 170°C, to form a preformed board having a thickness of 2.5 mm. The preformed board as prepared above was expanded in an IR oven at 200 °C for 2 minutes through preheating and moved to a mold press at room temperature, and a pressure was applied thereon. Here, the pressure was applied so that the sheet did not come out from the mold, i.e., 100 ton/m2, and thus, a molded article was completed.

### Example 2

A porous fiber-reinforced composite sheet was prepared in the same manner as in Example 1, except that a glass fiber having a silane-coated special surface to improve bonding strength with a polyester resin, was used instead of the glass fiber used in Example 1. Subsequently, the preformed board was molded in the same manner as in Example 1, expanded in the IR oven at 200°C for 2 minutes through preheating, and moved to a mold press at room temperature. Then, a pressure was applied thereon, and thus, a molded article was completed.

### Example 3

A porous fiber-reinforced composite sheet was prepared in the same manner as in Example 2, except that 10 parts by weight of the glass fiber and 90 parts by weight of the bicomponent polymer fiber were blended. Subsequently, the preformed board was molded in the same manner as in Example 2, expanded in the IR oven at 200 °C for 2 minutes through preheating, and moved to a mold press at room temperature. Then, a pressure was applied thereon, and thus, a molded article was completed.

### Example 4

A porous fiber-reinforced composite sheet was prepared in the same manner as in Example 2, except that 90 parts by weight of the glass fiber and 10 parts by weight of the bicomponent polymer fiber were blended. Subsequently, the preformed board was molded in the same manner as in Example 2, expanded in the IR oven at 200 °C for 2 minutes through preheating, and moved to a mold press at room temperature. Then, a pressure was applied thereon, and thus, a molded article was completed.

### Comparative Example 1

A glass fiber was prepared by cutting a 13 µm-thick glass fiber coated to be suitable for water dispersion so that a length was 13 mm. 40 parts by weight of the glass fiber and 60 parts by weight of polypropylene fiber were blended, and stirred in an aqueous solution with pH adjusted to 2 using hydrochloric acid for 1 hour. Here, a total content of the glass fiber and the polypropylene fiber was 2 g per 1L of water. The aqueous solution slurry after the stirring process was subjected to a wet papermaking process to form a web through a vacuum suction device in a head box. After the web was formed, the web was passed through an oven dryer at 140°C to completely dry moisture, thereby preparing a porous fiber-reinforced composite as a sheet. The sheet had a thickness of about 5 mm at 120 g/m². 10 sheets above were stacked so that the basis weight was 1200 g/m², followed by a hot press process at 170°C, to form a preformed board having a thickness of 2.5 mm. The preformed board as prepared above was expanded in an IR oven at 200 °C for 2 minutes through preheating and moved to a mold press at room temperature, and a pressure was applied thereon. Here, the pressure was applied so that the sheet did not come out from the mold, i.e., 100 ton/m², and thus, a molded article was completed.

### Comparative Example 2

A porous fiber-reinforced composite sheet was prepared in the same manner as in Comparative Example 1, except that a glass fiber having a specially silane-coated surface to improve bonding strength with a polyester resin, was used instead of the glass fiber used in Comparative Example 1. Subsequently, the preformed board was molded in the same manner as in Comparative Example 1, expanded in the IR oven at 200 °C for 2 minutes through preheating, and moved to a mold press at room temperature. Then, a pressure was applied on the board, and thus, a molded article was completed.

### Evaluation

### Experimental Example 1

Mechanical properties of the preformed boards prepared in Examples 1 to 4 and Comparative Examples 1 to 2 were compared with each other. The tensile strength and the flexural strength were measured after allowing the preformed boards prepared in Examples 1 to 4 and Comparative Examples 1 to 2 to stand at room temperature for 24 hours, respectively. The tensile strength and the tensile modulus were measured on a sample having a thickness of 2 mm according to ASTM D638, and the flexural strength and the flexural modulus were measured on a sample having a thickness of 2.5 mm according to ASTM D790.

Results thereof were shown in Table 1 below.

**[Table 1]**

| Classification | Tensile strength (MPa) | Tensile modulus (GPa) | Flexural strength (MPa) | Flexural modulus (GPa) |
|---|---|---|---|---|
| Example 1 | 37 | 2.8 | 23 | 1.9 |
| Example 2 | 62 | 3.8 | 26 | 1.6 |
| Example 3 | 25 | 1.7 | 15 | 1.4 |
| Example 4 | 47 | 3.0 | 17 | 1.5 |
| Comparative Example 1 | 25 | 1.9 | 17 | 0.9 |
| Comparative Example 2 | 42 | 3.5 | 22 | 1.5 |

It was confirmed that the content of the glass fiber of Example 4 was higher than that of the glass fiber of Example 2, but that the tensile strength of Example 2 was the highest. Generally, the tensile modulus is higher as the content of the glass fiber is increased due to a high tensile modulus value of the glass fiber itself, but rather, the tensile modulus of Example 2 was higher than that of Example 4. From the above description, it could be appreciated that as the content of the glass fiber was increased, the strength was improved, but at a predetermined content or more, further improvement in strength was not exhibited, and thus, the optimum content at which the maximum mechanical properties were obtained could be the content level of the glass fiber of Example 2.

### Experimental Example 2

Impact energy absorption performance of each of the preformed boards prepared in Examples 1 to 4 and Comparative Examples 1 to 2 was evaluated. The preformed boards prepared in Examples 1 to 2 and Comparative Examples 1 to 2 were allowed to stand at room temperature for 24 hours, and then, subjected to a falling ball impact test. The falling ball impact test was performed on the sample having a thickness of 2 mm at room temperature according to ASTM D3763.

Results thereof were shown in Table 2 below.

**[Table 2]**

| Classification | Impact energy Total NTT (J/mm) |
|---|---|
| Example 1 | 1.9 |
| Example 2 | 4.4 |
| Comparative Example 1 | 1.4 |
| Comparative Example 2 | 2.8 |

From the results of Table 2, the result of Example 1 in which the bicomponent fiber was used and the result of Comparative Example 1 in which the bicomponent fiber was not used, wherein other conditions were the same, could be compared with each other, and similarly, the result of Example 2 and the result of Comparative Example 2 could be compared with each other. Example 1 had a more excellent impact energy absorption performance than that of Comparative Example 1, and Example 2 had a more excellent impact energy absorption performance than that of Comparative Example 2.

Further, from the results shown in Table 2, Example 2 had a higher impact strength value than that of Example 1. Example 2 had improved bonding strength between the fiber and the resin due to the silane coating, and thus, impact could be effectively scattered when the material absorbed impact. Example 2 had a high tensile modulus in Table 1, and generally, a material having a high tensile modulus has high toughness to exhibit excellent impact resistance.

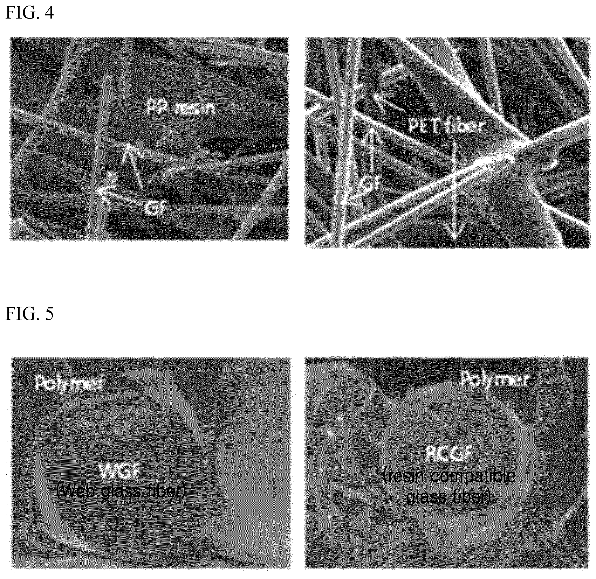

FIG. 4 is SEM images of inner parts of the preformed boards of Comparative Example 1 (left image) and Example 1 (right image). It could be confirmed that in Example 1, the core part of the bicomponent polymer fiber together with the glass fiber maintained as the fibrous particle, whereas in Comparative Example 1, the propylene fiber phase did not maintain in the fibrous shape. It was confirmed that in Example 1, the core part of the bicomponent polymer fiber maintained the fibrous phase, and thus, even after thermoforming, the content of fibrous particle in the material was higher than that in Comparative Example 1.

FIG. 5 is SEM images showing enlarged cross sections of glass fibers on fracture surfaces (after tensile experiment) of the preformed boards of Example 1 (left image) and Example 2 (right image).

In Example 2, the glass fiber that was surface treated with the silane-based compound to improve chemical affinity with the polyester resin for improvement of the bonding strength was used, and as shown in FIG. 4, it was confirmed that the chemical bonding strength between the glass fiber and the polymer was improved after bonding. It could be confirmed that in Example 2, the resin (resin material of the sheath part of the bicomponent polymer fiber) was stuck to the surface of the reinforcing fiber (glass fiber) in an unclean way after the fracture as compared to Example 1, which is because the reinforcing fiber (glass fiber) was chemically bound with the resin. As described above, when the reinforcing fiber and the resin were chemically bound, it is possible to minimize a defect caused by leaving (detaching) the reinforcing fiber from the resin at the time of fracture. As a result, the tensile strength may be improved as compared to Example 1.

While this invention has been described in connection with what is presently considered to be practical exemplary embodiments, it is to be understood that the invention is not limited to the disclosed embodiments, but, on the contrary, is intended to cover various modifications and equivalent arrangements without departing from the scope of the appended claims.

## Claims

1. A method for preparing a porous fiber-reinforced composite comprising:
dispersing a reinforcing fiber and a bicomponent polymer fiber in an acidic aqueous solution to prepare a slurry solution;
forming a web from the slurry solution by a wet papermaking process; and
heat treating and drying the formed web,
wherein the reinforcing fiber is an inorganic fiber or an organic fiber,
the bicomponent polymer fiber includes a core part and a sheath part,
the core part includes a first thermoplastic resin, and the sheath part includes a second thermoplastic resin, and
a melting point of the first thermoplastic resin is higher than that of the second thermoplastic resin,
**characterised in that** the reinforcing fiber and the bicomponent polymer fiber are mixed to have a total content of 0.1 g to 10 g per 1L of the acidic aqueous solution.

2. The method of claim 1, further comprising:
stirring the slurry solution.

## Patentansprüche

1. Verfahren zum Herstellen eines porösen faserverstärkten Verbundstoffs, das Folgendes umfasst:
Dispergieren einer Verstärkungsfaser und einer Zweikomponentenpolymerfaser in einer sauren wässrigen Lösung, um eine Slurry-Lösung herzustellen;
Ausbilden einer Rolle aus der Slurry-Lösung durch einen nassen Papiererzeugungsvorgang; und
Wärmebehandeln und Trocknen der ausgebildeten Rolle,
wobei die Verstärkungsfaser eine anorganische Faser oder eine organische Faser ist,
die Zweikomponentenpolymerfaser einen Kernteil und einen Mantelteil beinhaltet,
der Kernteil ein erstes thermoplastisches Harz beinhaltet und der Mantelteil ein zweites thermoplastisches Harz beinhaltet, und
ein Schmelzpunkt des ersten thermoplastischen Harzes höher als der des zweiten thermoplastischen Harzes ist,
**dadurch gekennzeichnet, dass** die Verstärkungsfaser und die Zweikomponentenpolymerfaser gemischt werden, um einen Gesamtgehalt von 0,1 g bis 10 g pro 1 L der sauren wässrigen Lösung aufzuweisen.

2. Verfahren nach Anspruch 1, das ferner Folgendes umfasst:
Rühren der Slurry-Lösung.

## Revendications

1. Procédé de préparation d'un composite renforcé par des fibres poreuses comprenant :
la dispersion d'une fibre de renforcement et d'une fibre polymère à deux composants dans une solution aqueuse acide pour préparer une solution de bouillie ;
la formation d'une bande à partir de la solution de bouillie par un procédé de fabrication de papier humide ; et
le traitement thermique et le séchage de la bande formée,
dans lequel la fibre de renforcement est une fibre inorganique ou une fibre organique,
la fibre polymère à deux composants comporte une partie cœur et une partie gaine,
la partie cœur comprend une première résine thermoplastique et la partie gaine comprend une seconde résine thermoplastique, et
un point de fusion de la première résine thermoplastique est supérieur à celui de la seconde résine thermoplastique,
**caractérisé en ce que** la fibre de renforcement et la fibre polymère à deux composants sont mélangées pour présenter une teneur totale de 0,1 g à 10 g pour 1 de la solution aqueuse acide.

2. Procédé selon la revendication 1, comprenant en outre :
l'agitation de la solution de bouillie.
